# DEMANDE DE BREVET EUROPEEN

(11) **EP 1 057 438 A1**
(43) Date de publication de la demande: **06.12.2000**
(21) Numéro de dépôt: 00401134.2
(22) Date de dépôt: 25.04.2000
(51) Int. Cl.: A47J 37/04, A47J 37/06, A47J 37/07

(54) **Gril à plateaux interchangeables**

(30) Priorité: 26.04.1999 FR 9905229
(71) Demandeur: Hutteau, Claude, 77123 Noisy sur Ecole (FR)
(72) Inventeur: Hutteau, Claude, 77123 Noisy sur Ecole (FR)

(57) **Abrégé**

Gril de type commercial composé d'un caisson (1) sur lequel vient s'adapter le bloc de chauffe (2) et où coulissent deux bras (4) solidaires destinés à recevoir différents plateaux, pour la cuisson simple, rapide et commode des merguez - andouillettes - viandes et poissons, en plus ou moins grande quantité dans un minimum d'encombrement. Pour les pièces cylindriques, les plateaux sont constitués d'enroulements hélicoïdaux (3) de différents diamètres maintenus dans un cadre de profilé «U». Les plateaux de «forme carrée » pourront, pour les pièces rondes, être suspendus verticalement (chargement et éjection) ou horizontalement pour la cuisson. La position la plus reculée des plateaux permet de les retourner de 180° ou d'arrêter une cuisson (mise en attente).

## Description

### Secteur d'application

La présente invention est toujours relative à la création d'appareils de type « GRIL » pour la cuisson de façon simple et commode des merguez - saucisses - andouillettes - viandes et poissons, en grande ou moyenne quantité. Ces appareils, pour répondre aux besoins des utilisateurs et aux normes d'hygiène en la matière, seront réalisés en modèle commercial, dans le secteur de l'industrie se référant à la fabrication d'ustensiles de ce genre.

### Etat de la technique

La demande actuelle s'oriente vers des types de cuisson plus hygiénique tout en simplifiant les tâches compliquées, longues et pénibles de certains appareils présents aujourd'hui sur le marché. En effet, dans ce domaine, la cuisson verticale présente des avantages incontestables par rapport aux cuissons conventionnelles, principalement en matière d'odeur et de graisses brûlées.

De même, la préparation et le retournement des pièces à cuire représentent un travail long et compliqué, sans omettre, sinon après de grandes manipulations, de pouvoir arrêter de façon rapide le cours d'une cuisson.

### DESCRIPTION DE LA TECHNIQUE

L'appareil, objet de la présente invention, a pour but d'éliminer les inconvénients précités et permet :
- le chargement par avance des pièces à cuire dans les plateaux,
- de cuire en une seule fois un grand nombre de pièces ayant une forme cylindrique (merguez - saucisses - andouillettes voire brochettes) dans un minimum d'encombrement
- le retournement à volonté, de toutes les pièces à cuire par une simple manoeuvre
- d'arrêter à tout moment une cuisson (mise en attente) ou d'en limiter l'intensité par une simple manoeuvre, en éloignant à volonté les pièces à cuire du foyer tout en les maintenant chaudes sans en altérer la saveur, ce qui est le but recherché dans ce mode de cuisson.

La représentation détaillée des vues et schémas ci-après va permettre de mieux saisir les avantages que représentent ces innovations.

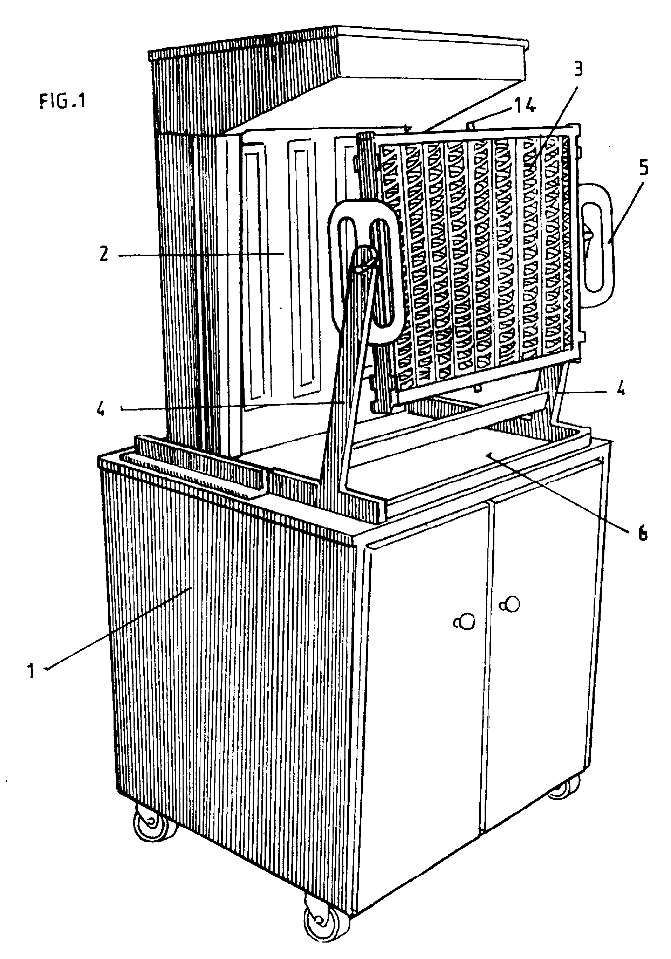

- La figure 1 est une vue générale en perspective du caisson équipé de son bloc de chauffe, d'un plateau destiné à la cuisson des charcuteries de forme cylindrique.

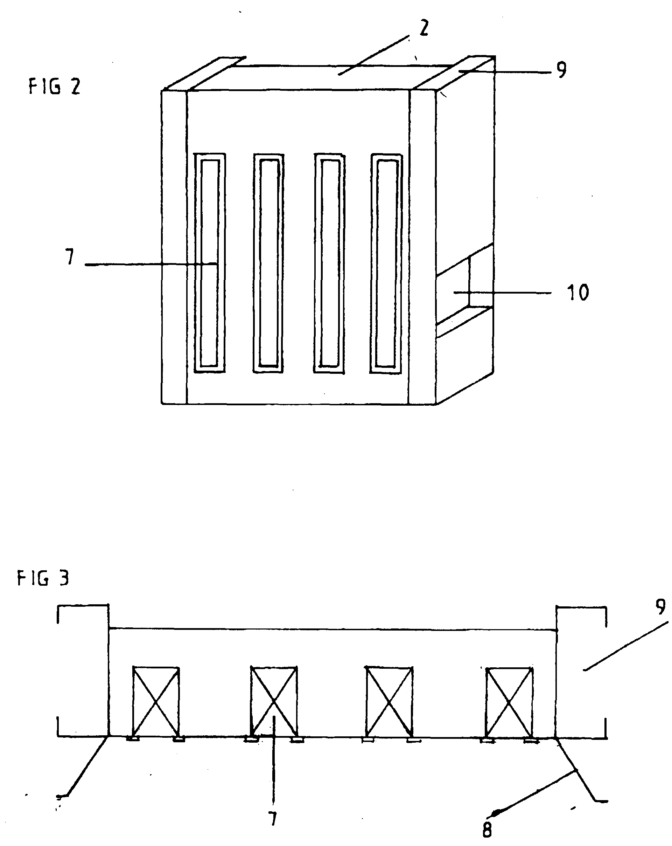

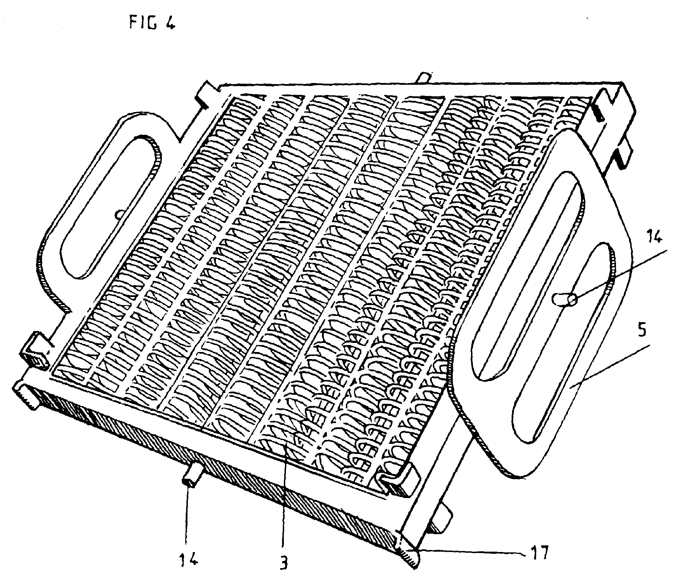

- Les figures 2 et 3 représentent le bloc de chauffe et une vue en coupe.

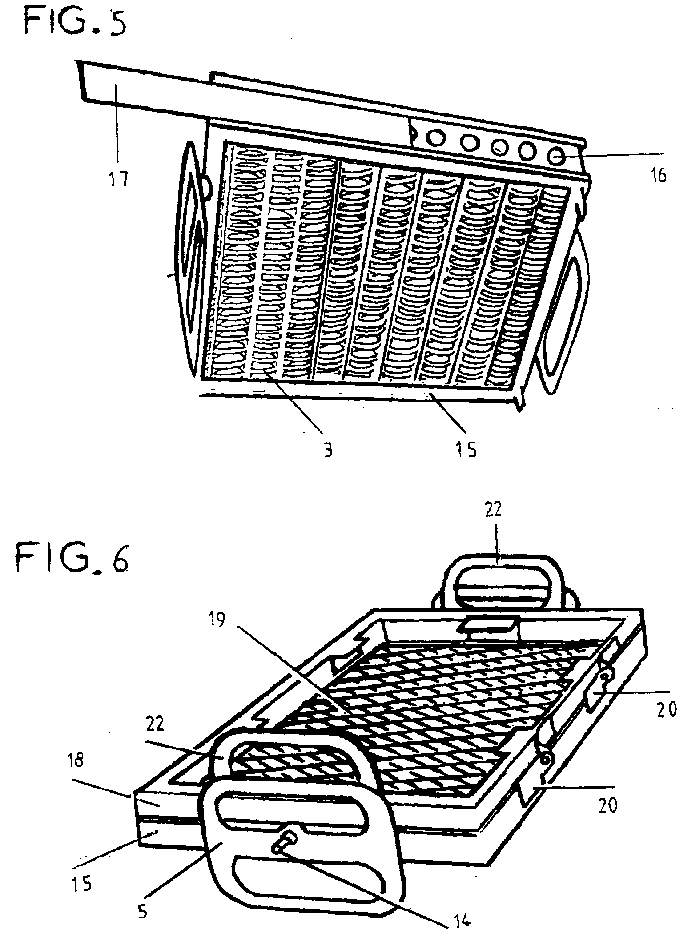

- Les figures 4 et 5 représentent une vue d'ensemble avec détails des plateaux destinés à cuire les pièces de forme cylindrique.
- La figure 6 représente le plateau dit « à viandes ou à poissons ».

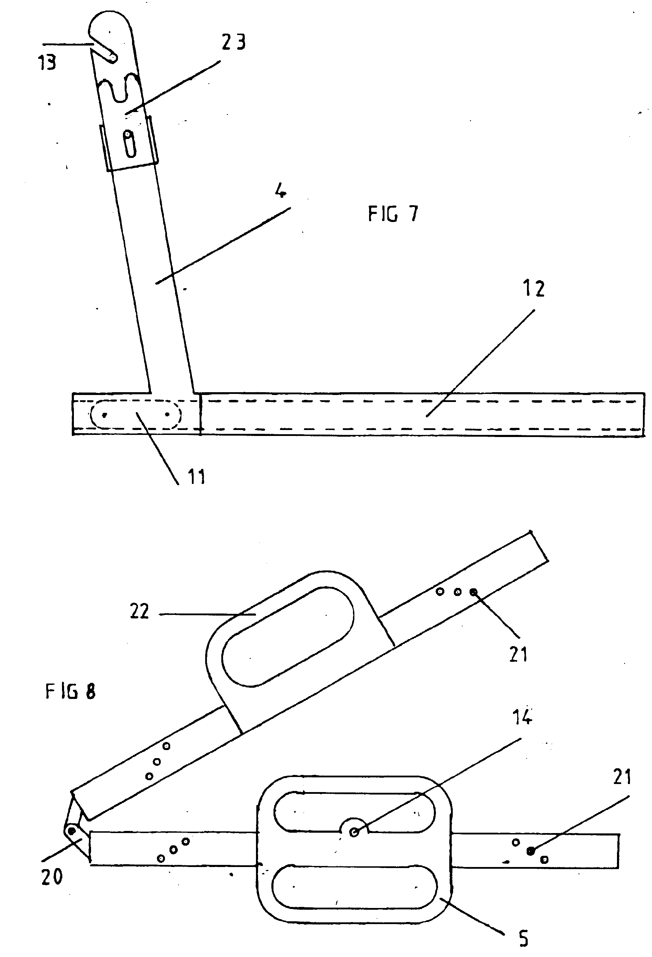

- La figure 7 est une vue d'un des bras mobiles dans lesquels seront suspendus les plateaux dont un curseur, poussé sur un pivot, empêchera leur rotation.
- La figure 8 représente une vue de détail des anses fixées sur deux des côtés du plateau dit « à viande» et des orifices où passeront des tiges rondes destinées au centrage et à l'écartement des grilles.

### DESCRIPTIF DETAILLE

Le gril est constitué :
- d'un meuble bas dit « caisson » destiné au rangement et sur lequel viennent s'adapter le bloc de chauffe et quatre plateaux différents dénommés ;
- plateau à merguez ou saucisses
- plateau à andouillettes voire brochettes
- plateau à viandes ou poissons
- et un plateau servant à la préparation, réception des pièces cuites et de service.

Le « caisson » (1) équipé pour son déplacement de quatre roulettes, est destiné au rangement des plateaux ou bouteille de gaz. Le dessus des portes, lorsque celles-ci seront ouvertes, serviront à poser le plateau dit de réception, qui recevra les pièces cuites de forme cylindrique éjectées du plateau. Le dessus du « caisson » supportera :
- le bloc de chauffe (1)
- les bras mobiles (4) où seront suspendus les plateaux
- le ou les bacs (6) récepteurs des graisses.

Le bloc de chauffe est équipé de quatre radiants (7) alimentés par paires par des robinets et allumeurs situés dans des niches (10) de chaque côté des cheminées (9).
Les flasques (8) ont pour objet d'éviter les pertes de chaleur sur les côtés et de déterminer la distance optimale de chauffe entre le plateau et le bloc de chauffe.
Enfin, en cas de panne, ledit « bloc » pourra, sans aucun outil, être séparé du caisson, à fin de réparation.

Les deux bras solidaires (4) en faux équerre fixés sur les parties mobiles (patins) (11) des rails de guidage linéaire (12) sont pourvus d'une gorge (13) à l'une de leur extrémité, destinée à recevoir les pivots (14) fixés dans les axes des plateaux. Poussé dans les plats à l'extrémité des pivots (14), le curseur (23) bloquera le plateau verticalement.

Suspendu dans les bras, le plateau à l'aide des anses doubles (5) peut :
- par un mouvement, avancer ou reculer
- la position arrière permet de stopper temporairement la cuisson (mise en attente), de retourner le plateau par une simple poussée, de 180° et de procéder, lorsque la cuisson est terminée, à l'éjection des pièces de forme cylindrique. Le maintien des pièces chaudes, s'effectuera en rapprochant à la demande, le plateau vers le bloc de chauffe.

Le plateau à merguez ou à saucisses est constitué d'une série d'enroulements hélicoïdaux maintenus côte-à-côte dans le cadre carré profilé « U ». Des orifices (16) du diamètre intérieur des enroulements et centrés par rapport à ceux-ci sont exécutés sur deux faces opposées du cadre, et permettent l'introduction des pièces à cuire. Le plateau étant chargé, deux glissières (17) viendront obstruer les orifices ci-dessus, piégeant ainsi les merguez ou autres. Suspendues dans les bras, toutes les pièces à cuire pourront être retournées sans effort en une seule manoeuvre.
La forme carrée du plateau, munie au centre, sur chaque face d'un pivot (14) a pour but essentiel de faire cuire les pièces non pas verticalement mais horizontalement afin d'éviter leurs écrasements.

Le plateau à andouillettes est de même conception que le plateau à merguez. Seul le diamètre des enroulements hélicoïdaux est supérieur.

Le plateau dit « à viandes ou poissons » est constitué de deux cadres (15 et 18) de profilé « U » dans chacun desquels coulisse et repose une grille (19) munie de petites griffes pour le maintien des viandes.
Le premier cadre (15) étant chargé, le second (18) vient se superposer à l'aide de charnières (20) sur le premier. Rabattu, un système d'agrafage rapide rendra les cadres solidaires.
Le centrage des grilles à l'intérieur, s'effectuera à l'aide de tiges rondes traversant horizontalement les cadres. Ces tiges seront positionnées à l'aide d'orifices (21) percés de chaque côté des cadres et auront en plus du centrage, le but de maintenir l'écartement des grilles en fonction des épaisseurs des viandes à cuire.

Le plateau de réception et de service est destiné à préparer les charcuteries et viandes et à recevoir après cuisson les pièces de forme cylindrique, à la suite du retrait des glissières (17) et permettant également le service direct à table.

Tous les plateaux sont munis sur deux ou quatre côtés (suivant le mode de cuisson ) d'anses « simples » (22) ou « doubles » (5) qui permettent de les suspendre dans les bras et d'effectuer toutes les manoeuvres cités ci-dessus. Le curseur (23) aura pour fonction de les bloquer verticalement.

Certaines rectifications pourront être apportées à ce gril, mais en aucun cas elles n'auront pour effet d'en modifier l'essentiel.

## Revendications

1. Gril à plateaux interchangeables constitué d'un caisson mobile avec sur chacun de ses côtés, un guide linéaire.
Caractérisé par des bras fixés sur les patins, (11) des guides destinés à suspendre différents plateaux munis d'anses " doubles ", qui par un simple mouvement peuvent avancer ou reculer ; poussés vers un bloc dit " de chauffe " situé à l'arrière du caisson. Une face du plateau sera en phase de cuisson. La position arrière permet de stopper la cuisson (mise en attente) ou de retourner le plateau de 180°.

2. Gril à plateaux interchangeables suivant la revendication 1 se caractérise par le fait que tous les éléments fragiles destinés à produire les sources de chaleur (radiants - robinets - allumeurs) sont protégés dans un bloc dit " de chauffe " qui, en cas de panne ou de transport, pourra être séparé du caisson sans aucun outil ou risque de détérioration.

3. Gril à plateaux interchangeables suivant la revendication 1, se caractérise en ce qui concerne les deux bras solidaires (4) en fausse équerre fixés sur les parties mobiles (patins) (11) qui coulissent dans des rails (12) de guidage linéaire, sont pourvus d'une gorge (13) à l'une de leur extrémité, destinée à recevoir les pivots (4) des plateaux qui pourront ainsi être retournés à 180° ou 360°.

4. Gril à plateaux interchangeables suivant les revendications 1 et 3 se caractérise en ce qui concerne les plateaux destinés à la cuisson des pièces ayant une forme cylindrique, par une série d'enroulements hélicoïdaux (3) de diamètres différents (suivant la grosseur des pièces à cuire) maintenus côte à côte dans un cadre carré de profilé " U ". Des orifices (16) du diamètre intérieur des enroulements et centrés par rapport à ceux-ci, sont exécutés sur deux faces opposées du cadre, pour permettre l'introduction des pièces à cuire. Des glissières (17) viendront obstruer ces orifices après chargement du plateau.

5. Gril à plateaux interchangeables suivant les revendications 1 et 4 en ce qui concerne la forme carrée des plateaux, munis d'un pivot (14) au centre des quatre côtés, a pour but essentiel de faire cuire les pièces non pas verticalement (chargement) mais horizontalement afin d'éviter leur écrasement.

6. Gril à plateaux interchangeables suivant les revendications 1 et 3, se caractérise par un plateau dit " à viandes ou poissons " constitué de deux cadres de profilé " U " dans chacun desquels coulisse et repose une grille (19) munie de petites griffes pour le maintien de viandes. Ces deux cadres sont rendus solidaires par le jeu de charnières (20) sur une face, et un agrafage rapide sur l'autre.

7. Gril à plateaux interchangeables suivant la revendication 6 se caractérise par un système de centrage et de maintien des grilles par des tiges rondes, traversant horizontalement les cadres. Ces tiges seront positionnées à l'aide d'orifices (21) percés de chaque côté des cadres et, auront en plus du centrage, le but d'écarter et maintenir les grilles en fonction des épaisseurs des viandes à cuire.

8. Gril à plateaux interchangeables suivant les revendications 4 et 6 se caractérise par des anses "doubles" (5) traversées en leur centre par des pivots (14) et des anses "simples" (22) suivant le type de plateau fixées dans le milieu des côtés des cadres.

9. Gril à plateaux interchangeables suivant les revendications 4 et 6 se caractérise par des plats en bout des pivots (14) où l'entaille d'un curseur (23) coulissant sur un bras viendra s'emboîter, empêchant ainsi le basculement du plateau.
